# EUROPEAN PATENT APPLICATION

(11) **EP 4 130 946 A1**
(43) Date of publication of application: **08.02.2023**
(21) Application number: 21190171.5
(22) Date of filing: 06.08.2021
(51) Int. Cl.: G06F 3/041, G06F 3/044

(54) **METHOD AND SYSTEM FOR CALIBRATING AND OPERATING A CAPACITIVE SENSOR**

(71) Applicant: Interactive Scape GmbH, 10179 Berlin (DE)
(72) Inventor: COOPE, Giles, 10179 Berlin (DE); EWERLING, Philipp, 10179 Berlin (DE); PETERS, Günter Paul, 10179 Berlin (DE); HELMER, Hauke, 10179 Berlin (DE); MANGOLD, Ulrich, 10179 Berlin (DE)
(74) Representative: Pfenning, Meinig & Partner mbB

(57) **Abstract**

A method and system for calibrating and operating a capacitive sensor are disclosed. The method comprises receiving raw first sensor data from the capacitive sensor and dividing the raw first sensor data into raw sensor data portions each corresponding to a contiguous sub-area of the capacitive sensor. The method further comprises determining an updated calibration baseline for a corresponding sub-area by determining whether there is a disturbance in the raw sensor data portion indicating an object or a movement on or over the corresponding sub-area or if said corresponding sub-area is free from disturbance. If the sub-area is determined to be free from disturbance, the updated calibration baseline of the sub-area is determined based on the current sensor measurements; otherwise the updated calibration baseline of the sub-area is determined based on a previous calibration baseline, raw sensor data of other raw sensor data portions, and/or pre-determined default values.

## Description

The present application relates to a calibration method and respective system for a capacitive sensor.

Capacitive sensors are used today in many different applications, most notably in touch sensitive displays, such as the displays of smartphones, tablets, or other touch sensitive computing devices as well as vending machines. Capacitive sensors are also used in capacitive buttons, such as touch sensitive buttons of household appliances, calculators, light switches and many other places. An advantage of touch sensitive displays lies in that fact that the input as well as the output can be affected via the screen.

Touch sensitive displays are typically able to detect the location on the screen which was touched, for example by a finger.

Capacitive sensors (whether integrated into a touch screen or not) usually comprise a grid of electrical conductors such as electrodes, which are arranged in columns and rows aligned perpendicular to each other, wherein the column and row conductors are separated by a layer of insulating material. The row conductors constantly send electrical signals to the column conductors. When the sensor is touched, the electrical capacitance of the insulating layer changes and the signal at these positions changes as well, typically by becoming weaker. A processor then determines a position, at which the capacitance signal has changed and sends the location and duration of the touch to software of the respective device, which then carries out the respective action based on the touch.

Such projected capacitive sensors are typically paired with controllers that drive the electrodes of the conductors to specific AC voltages and frequencies and measure changes in capacitances along the conductors such as electrodes.

In capacitive sensors, generally self capacitance mode and mutual capacitance mode can be distinguished. In self capacitance mode all row electrodes and also all column electrodes are driven simultaneously to the same voltage and the change in capacitance along each driven electrode is measured. This results in a row vector and column vector of measured values. In this mode it is often impossible to discern the true positions of multiple simultaneous touches, and non-grounded objects cannot be observed in self capacitance data. This can be advantageous, for example, if the sensor is wet there is little interference. However, this same feature makes self-capacitance useless for conductive object recognition, such as smartphones or other objects placed on the sensor.

In mutual capacitance mode each row (or column) electrode is driven to a specific voltage and frequency, and all of the column (or row) electrodes which intersect or cross it are simultaneously measured for a change in capacitance. This gives a value per electrode crossing point, which can be understood as a two-dimensional grayscale image corresponding to the two-dimensional geometry of the sensor. Here the positions of multiple simultaneous touch points can be determined unambiguously. Ungrounded objects are also visible in the mutual capacitance data, due to an effect known as retransmission, where the driven signal is transmitted through the electrically conductive object and into other grounded electrodes in the sensor. This can result in either a loss or gain in mutual capacitance between row and column electrodes.

Before the mutual capacitive data is processed into touch points it is usually necessary to calibrate the data by subtracting a given baseline measurement from the measured values. The baseline should correspond to the mutual capacitance measurements when no touch or object is on the sensor.

The exact pattern of this baseline or background data is not only unique for each sensor, as it depends on tiny differences in the sensor and connector construction. It also varies depending on how the sensor is installed, the initial conditions when the controller is powered on (if frequency scanning selects a different frequency for example) and changes over time with varying temperature and humidity conditions. Thus, it is necessary to dynamically recalibrate the sensor to determine an updated baseline periodically over time.

In traditional touch controllers, such as smartphones, this calibration takes place whenever the sensor is determined to be free from touch, which is frequently the case for smartphones, tablet computers or the like, which are usually not continually touched for extended periods of time. A touch can be observed in the raw data by e.g. considering the column electrodes one at a time and looking for small regions of major deviation of values. In this case calibration does not take place. If the sensor is determined to be empty the background is updated with the current measured image.

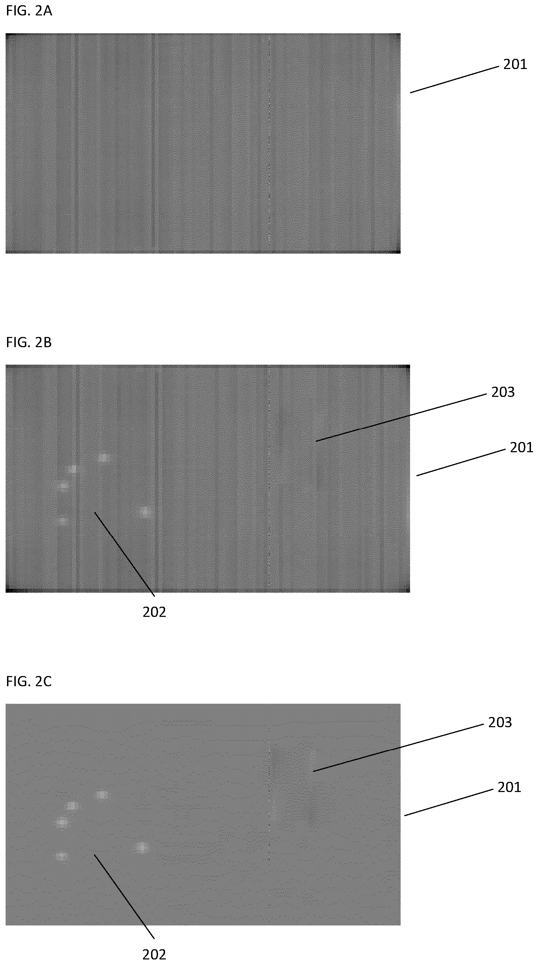

This approach however does not work as well for large capacitive sensors such as touch tables, where it is possible and sometimes even desired that an object is placed on the sensor for an extended period of time. In this case, using the calibration method as described above, no calibration is possible. In addition, traditional touch screen devices, such as smartphones, generally are not optimized for the detection of ungrounded conductive objects, as these are often not clearly visible in the raw sensor data using the conventional method of determining touches. This problem is further described below with reference to Figs. 2A - 2C.

Thus, there is a need for improved calibration methods for capacitive sensors, in particular for large capacitive sensors.

This problem is solved by the method and system according to the independent claims. Further advantageous embodiments are defined according to the dependent claims as well as the following description and figures.

According to a method for calibrating a capacitive sensor, in accordance with the present application, in a first step, raw first sensor data is received from the capacitive sensor.

The raw first sensor data thereby corresponds to the measured electrical signals of the capacitive sensor, which has preferably not been pre-processed or which has only been pre-processed by a simple pre-processing technique such as a temporal smoothing. In particular, pre-processing may be restricted to normalizing (i.e. adding of a constant value and scaling) the data to have a mean and deviation suitable for the subsequent processing, and basic noise reduction, such as temporal or spatial noise reduction. Pre-processing preferably does not include any feature level pre-processing, to exclude or selectively modify certain areas of the sensor data.

The raw first sensor data is then divided into a plurality of raw sensor data portions, wherein each raw sensor data portion corresponds to a contiguous sub-area of the capacitive sensor.

The capacitive sensor usually has a predefined resolution, which corresponds to the size of the grid of the electrical conductors, i.e. the number of points for which distinct measurements of capacitance are possible. Usually, as explained above, the capacitance is measured by way of two conductor grids of electrodes, which are then placed perpendicular to and above each other, thereby essentially defining a matrix of measurement points, which are arranged, and may also be referred to, as rows or columns of measurement points, at which changes in capacitance can be detected. While the matrix shape of the measurement points is often used, other shapes or arrangements are also possible based on the current application scenario. For example, a capacitive sensor does not need to be flat, but could be any three-dimensional surface. However, every capacitive sensor typically comprises a predefined number of measurement points, with these measurement points and their respective data being distinguishable.

Each of the raw sensor data portions may comprise data from at least one of the measurement points of the capacitive sensor and could, preferably, also comprise the data from several measurement points of the capacitive sensor.

The raw data portions and their respective sub-areas together may cover the entire surface of the sensor, i.e. each measurement point of the sensor is assigned to one of the raw data portions and respective sub-area. In some embodiments, the sub-areas may correspond to a matrix-like partitioning of the sensor surface, with each or most or at least two of the sub-areas have the same size.

In order to allow for calibration of the capacitive sensor even when there is a conductive object, especially an ungrounded electrically conductive object on the surface of the capacitive sensor, the calibration, i.e. the determination of an updated baseline, is then carried out selectively as follows:
For each of at least a subset of the raw sensor data portions, an updated calibration baseline for the corresponding sub-area is determined by:
a) determining, based on the raw sensor data portion whether there is a disturbance in the raw sensor data portion indicating an object or a movement on or over the corresponding sub-area or if said corresponding sub-area is free from disturbance;
b) if the sub-area is determined to be free from disturbance: determining the updated calibration baseline of the sub-area based on the current sensor measurements associated with the sub-area;
c) if it is determined that there is a disturbance in the raw sensor data portion, determining the updated calibration baseline of the sub-area based on at least one of: a previous calibration baseline, raw sensor data of other raw sensor data portions, and/or pre-determined default values.

Step a) is thereby used to determine if the current raw sensor data portion can be calibrated, i.e. if a new baseline can be determined. As explained above, determining of a baseline is only possible if the data of the respective measurement points of the capacitive sensor is not adversely influenced by a conductive object which disturbs the measurement data. Such a disturbance in the data can be caused by a finger or other grounded conductive object, which is placed on the corresponding sub-area of the capacitive sensor, or by an ungrounded conductive object, such as a smartphone or specific conductive input devices or other conductive objects, including unknown objects which have been placed on the sensor unintentionally. Such a disturbance can also already be caused in the data of the respective measurement points when a conductive object, such as the hand of a user or a conductive object is placed over the capacitive sensor, but which does not actually touch the sensor. This is the case, for example when swipe gestures are performed by a user directly over the capacitive sensor or when the hand of a user or a conductive object is approaching the sensor. In these cases, a change in capacitance may even be detected without direct touch or already immediately prior to the actual touch.

Depending on whether or not a disturbance was detected for the current sensor data portion, either step b) or step c) is executed for the respective subset of the raw sensor data and associated sub-area.

Step b) is executed if the current sub-area and associated sensor data portion is determined to be free from disturbance. In this case, an updated calibration baseline can be determined for the sub-area based on the current sensor data measurements. When determining the updated calibration baseline, it is optionally also possible to additionally take previous sensor data measurements for the sub-area also into account to allow for a temporal smoothing of the updated calibration baseline. For example an exponential smoothing filter or another low pass filter could be used for reducing noise.

Furthermore, a spatial smoothing could be applied, which could, in particular, be advantageous if the distinct sub-areas are re-calibrated independently, wherein a spatial smoothing allows for avoiding large offsets between the baselines of recently calibrated sub-areas and the baselines of sub-areas which have not been recently recalibrated. Large offsets between baselines of different areas could, for example, be caused if the environmental conditions such as temperature, direct sunlight or humidity change rapidly or abruptly. However, when calibration is frequently executed the change over time is not large, thereby allowing for determining the baselines for the sub-areas individually.

Thus, when the sub-area is free from disturbance, the updated calibration baseline is either set according to the current sensor measurements or according to a temporal smoothing of the current sensor measurements, or respective measurement points associated with the sub-area, as well as a few recent sensor measurements of the current sub-area.

Step c) is executed if it is determined, during Step a), that there is a disturbance in the raw sensor data portion of the current sub-area, i.e. there is either a conductive object on the current sub-area, or there is a movement of a conductive object close to the surface of the current sub-area.

In this case, the current sub-area cannot be re-calibrated based on the current sensor measurements, i.e. the current values of the measurement points associated with the current sub-area, as the current sensor measurements do not provide an accurate baseline measurement and would result in malfunctioning of the sensor when used for re-calibration. Rather, in this case, the updated calibration baseline is determined based either on the previous calibration baseline and/or on the raw sensor data of other raw sensor data portions, preferably raw sensor data portions associated with areas surrounding the current sub-area, and/or on pre-determined default values.

If re-calibration is executed frequently, i.e. at most every few minutes or even every few seconds or fractions of a second, it is possible to simply keep the previous calibration baseline for a sub-area in which there is a disturbance, i.e. the up-dated calibration baseline may be equated with the previous calibration baseline for the respective sub-area, thereby resulting in the calibration baseline for the currently sub-area to not be updated in the current re-calibration cycle. Please note that the computational cost increases when the interval for re-calibration is shortened.

Alternatively, for example if the re-calibration is only executed at longer intervals, or if frequent changes of the baselines are expected to the frequently changing environmental conditions, it is possible to update the calibration baseline of the current sub-area based on the previous calibration baseline in combination with raw sensor data of other sub-areas, such as neighbouring sub-areas. For example, a mean offset between previous and updated baseline values of the neighbouring, undisturbed sub-areas can be determined, which may then be added to the previous calibration baseline of the current sub-area, to approximate an updated calibration baseline of the current sub-area. Also, different and more complicated offset calculations can be used in order to account for non-linear effects in the changes in capacitance due to changing environmental conditions.

Also, it is possible, to use a default calibration baseline or to determine an offset, which is then added to the previous calibration baseline, in order to update the calibration baseline of the current sub-area when a disturbance is detected. The use of a default value may especially be beneficial, when a disturbance is already detected on power-up of the capacitive sensor, so that no previous calibration baseline exists. For instance, an object still could be located on the capacitive sensor before the capacitive sensor is turned on.

Note that the updated calibration baseline is not necessarily determined for each of the sensor data portions. Rather, it is possible to cycle through the different sensor data portions and e.g. only determine an updated calibration baseline for one sensor data portion or a proper subset of all sensor data portions during each iteration, while the calibration baselines corresponding to the remaining sensor data portions are not changed. This, in addition to selectively calibrating only the empty sub-areas, i.e. the areas which are determined to be free from disturbance, also has the advantage of increased speed, as the calibration can be resource intensive and can, therefore, slow down the performance of the data processing.

The advantageous effect of efficiently determining an accurate calibration baseline is therefore achieved by a combination of disturbance detection from the raw sensor data on a per-sub-area basis and on also updating the baseline on a per-sub-area basis.

Further examples for how precisely step a), i.e. the determination if there is a disturbance in the current sub-area, can be implemented are explained below and further down.

For example, the determining whether there is a disturbance in the raw sensor data portion can comprise determining if a conductive object is currently located on the corresponding sub-area. This can, for example, be implemented by comparing the raw sensor measurements, e.g. by way of a statistical distribution to look for outliers, or by using a neural network or other machine learning technique as further explained below.

The calibration method discussed above may optionally further comprise the steps of
e) selecting a subset of the plurality of raw sensor data portions;
f) determining the updated calibration baseline for the corresponding sub-area for each of the selected raw sensor data portions; and
g) combining the updated calibration baselines of the selected sub-areas with the previous calibration baselines of unselected sub-areas into an updated calibration baseline of the capacitive sensor.

Herein, step e) may be executed before determining, for each of at least a subset of the raw sensor data portions, an updated calibration baseline for the corresponding sub-area according to steps a), b) and c).

Step e) can thereby be used to select the subset of raw sensor data portions based on each of which steps a), b) and c) are then executed, as also defined in step f).

Step g) may then be used to determine an updated calibration baseline for the entire capacitive sensor by combining the updated calibration baselines of the selected raw sensor data portion and their corresponding sub-areas with the previous calibration baselines of the un-selected raw sensor data portions. Optionally, the calibration baseline for each sub-area can additionally be smoothed over time to avoid large deviations within the calibration baseline of the entire sensor.

In some instances, the selection of the subset of raw sensor data portions is applied repeatedly and a different subset of the plurality of data portions can be selected during subsequent applications until each data portion has been selected.

Thus the calibration can optionally be applied repeatedly and during each repetition one or more raw sensor data portions are subsequently selected until each raw sensor data portion and corresponding sub-area has been selected, at which point the selection starts again with the first selected raw sensor data portions. In this manner, each sub-area and raw sensor data portion is typically selected once during a predefined time. For example, the capacitive sensor usually measures capacitive values in frames which are measured at intervals ranging from about 2 ms to 20 ms, e.g. between 5 ms and 15 ms and in particular about 10 ms long. For each frame, there exists, therefore, a set of raw sensor data for the capacitive sensor. As the determination of the calibration baselines may be computationally expensive, mainly due to the computational expense of the determination whether there is a disturbance, and as the baselines generally do not change significantly at such short intervals, not the entire display needs to be re-calibrated with each frame. For example, if there are pre-defined sub-areas and corresponding sensor data portions of the entire sensor then one of the sensor data portions can be re-calibrated during each frame, thereby effectively cycling through all sensor data portions and sub-areas, before starting again with the first sub-area. If there are, e.g. 100 sub-areas, then the entire sensor might be re-calibrated every 100 frames. If some of the sub-areas are not re-calibrated due to disturbance, then the next chance of re-calibration would be after another 100 frames. Note that the number 100 is only used for illustrative purposes. Preferably the number of sub-areas would be between 6 and the total number of measurement points of the sensor. Given that the frame length is very short and the environmental conditions only tend to change slowly over time, this approach may lead to a good trade-off between computational efficiency and accurateness of the calibration baseline.

In order to determine if there is a disturbance of a raw sensor data portion, it is optionally possible to determine if there is a movement over the corresponding sub-area based on at least two subsequent measurements of raw sensor data corresponding to the sub-area. Thus, a disturbance, in particular a disturbance based on movement can possibly be more accurately determined when considering two subsequent measurements and the respective change or difference of said subsequent measurements. For this purpose, it is possible to store the previous, or a predefined number of previous raw sensor data measurements of the capacitive sensor or of specific areas of the capacitive sensor in an associated memory to retrieve for subsequent computations.

Optionally, the first raw sensor data is divided into the plurality of sensor data portions based on a predefined grid, such as a regular grid, wherein each of the raw sensor data portions comprises the same or a similar number of measurement points of the capacitive sensor. This is particularly advantageous for flat, rectangular capacitive sensors, such as capacitive sensors used for large touch screen displays or touch tables.

It is furthermore possible that the predefined grid is dynamically adjusted if it is determined that an object is on the corresponding sub-area of at least one of the raw sensor data portions in the subset of raw sensor data portions. This can be especially useful if each raw sensor data portion comprises several measurement points and only some of the measurement points are affected by the disturbance. In this case, by adjusting the grid, either temporarily or permanently, it is possible to still re-calibrate the unaffected measurement points. This may in particular also be useful when it is determined that a disturbance is detected multiple times in a row for the same raw sensor data portion and sub-area. For example, if a sub-area is determined to be disturbed by an object for more subsequent calibration cycles than a predefined threshold, then the sub-area could be divided into a pre-defined number of sub-sub-areas, wherein the number of sub-sub-areas is between 2 and the number of measurement points of said sub-area. The division into sub-sub-areas can be reversed once all sub-sub-areas belonging to the sub-area are determined to be free from disturbance during one calibration cycle.

Determining if there is a disturbance in the raw sensor data portion associated with a sub-area is, in general, not an easy task, in particular when ungrounded objects should also be detected. It is possible to implement a detection based on simple comparisons of different raw sensor measurements. However, to further improve the accuracy and efficiency for real-time calibration, the determining if there is a disturbance in the raw sensor data portion is optionally performed by using a pre-trained neural network or other machine learning model. Neural networks, and also other, alternatively usable machine learning methods, have the advantage that the computationally expensive training of the machine learning model, such as the neural network, only needs to be performed once before the capacitive sensor is actually delivered to the customer, and that the subsequently detection based on newly measured raw sensor data, can then be performed very quickly in real time. Furthermore, neural networks have the advantage that they produce good results even for ungrounded objects based on the raw sensor data of sub-areas, so no additional pre-processing for noise reduction or smoothing of the measured data is necessary thereby additionally saving resources.

To yield particularly good results, it is optionally possible to pre-train the neural network using artificially enhanced training data. Such artificially enhanced training data is determined from actual measured training data, for example by re-organization and/or re-combination of the measured data, usually using measured data collected from several different capacitive sensors and several common objects which are placed on the capacitive sensors in particular under different environmental conditions. A neural network may also be trained so that it can be applied for raw input data of different sizes, i.e. for sub-areas or even sub-sub-areas or different sizes.

Preferably the capacitive sensor to which the disclosed calibration method is applied is a capacitive sensor which has a diagonal length of at least 60 cm and/or a resolution of at least 80 by 48 distinguishable measurement points.

The display resolution may, however, be much greater, such as the touch sensitive display into which the capacitive sensor may be integrated having a resolution of at least 1900 by 1000 pixels. Frequently used display resolutions include, e.g., 1920 by 1080 pixels, 2560 by 1440 pixels, 3840 by 2160 pixels or 7680 by 4320 pixels. The method described herein could, however, also be applied to square or circular panels, for examples having a resolution of 2160 by 2160 pixels In some embodiments, the capacitive sensor may be part of a touch table including a touch sensitive display as tabletop. Note that the application is, however, not limited to touch tables, but could also be applied to other capacitive sensors, including capacitive sensors which are arranged in a three-dimensional surface. The capacitive sensor can also be part of a tablet computer or other touch sensitive display. It is noted, however, that the incorporation of the capacitive sensor into a touch sensitive display is optional. The capacitive sensor can also be used without display.

The capacitive sensor may, preferably comprise a plurality of at least six sensor data portions and sub-areas, optionally more than 50 or even more than 90 or 100 sensor data portions. It is also possible that each measurement point is treated as its own sensor data portion. However, while smaller sensor data portions may be faster to calibrate, the number of sensor data portions may adversely affect the computational efficiency. Therefore, in some embodiments there are about between 25 and 1000 sensor data portions, each of which comprise between 16 and 1024 measurement points. A sensor of size 80 by 48 distinguishable measurement points could therefore be divided into 6 to 3840, e.g. between 25 and 200, in particular between 50 and 100 sub-areas and respective sensor data portions.

In addition to the disclosed method for re-calibrating the capacitive sensor, the present application also comprises a method for operating the capacitive sensor. Said method for operating the capacitive sensor comprises, in addition to the calibration of the capacitive sensor mentioned above, also the following steps:
h) Receiving raw second sensor data of the capacitive sensor;
i) Subtracting the current baseline of the capacitive sensor from the second sensor data to obtain a calibrated second sensor data.

Herein, the raw second sensor data is raw sensor data which could be received in a subsequent frame after the first sensor data, which was used for calibration of the capacitive sensor. However, it is also possible that the first and second sensor data are identical, i.e. the same sensor data is first used for calibration and then used for operating the display based on calibrated data. The current baseline, as determined according to the method described above, is then subtracted from the second sensor data, thereby resulting in calibrated second sensor data, with the baseline measurements of the capacitive sensor removed.

The calibrated second sensor data can then be used for subsequent computations, i.e. for detecting objects which are located on the capacitive sensor and for inferring a type of the detected objects and/or movements of the detected objects from the calibrated second sensor data in order to determine a user input of the capacitive sensor.

While it is possible, as described above, to determine if an object is located on the capacitive sensor or if a certain sub-area of the capacitive sensor is disturbed by any object based on the raw first sensor data as described above, the calibrated second sensor data can then be used for more accurate input detection due to the absence baseline measurements in the calibrated second sensor data.

Note that each raw sensor data can be used in a two-fold manner, i.e. for re-calibrating the capacitive sensor based on the respective raw sensor data, and also for operating the capacitive sensor based on calibrated sensor data obtained by subtracting either the previous or the newly determined baseline from the raw sensor data.

The present application also relates to a calibration system for a capacitive sensor, the system comprising
- a capacitive sensor;
- a memory comprising a previous calibration baseline of the capacitive sensor;
- a measuring unit configured to measure raw first sensor data of the capacitive sensor;
- a processing unit configured to divide the raw first sensor data into a plurality of raw sensor data portions, wherein each raw sensor data portion corresponds to a contiguous sub-area of the capacitive sensor;
- the processing unit further configured to determine, for each of at least a subset of the raw sensor data portions, an updated calibration baseline for the corresponding sub-area by:
   a. determining, based on the raw sensor data whether there is a disturbance in the raw sensor data portion indicating an object or a movement on or over the corresponding sub-area or if said corresponding sub-area is free from disturbance;
   b. if the sub-area is determined to be free from disturbance: determining the updated calibration baseline of the sub-area based on the current sensor measurements associated with the sub-area;
   c. if it is determined that there is a disturbance in the raw sensor data portion, determining the updated calibration baseline of the sub-area based on at least one of: a previous calibration baseline, raw sensor data of other raw sensor data portions, and/or pre-determined default values.

The components of the system, i.e. the capacitive sensor, the memory, the measuring unit and the processing unit may, for example be integrated into or associated with a large touch table or device which is operated by placing conductive objects onto a surface of said device.

The features and method steps described with respect to the method for calibrating the capacitive sensor and the method for operating the capacitive sensor may also be comprised, or respectively implemented, by the calibration system.

Preferred embodiments of the present application are subsequently described with respect to the following drawings.
FIG. 1A shows a schematic drawing of a touch table comprising a large capacitive sensor;
FIG. 1B shows a schematic top view of a capacitive sensor and measurement points;
Fig. 2A shows a visual representation of capacitive measurements of an empty capacitive sensor;
FIG. 2B shows a visual representation of capacitive measurements of the sensor of FIG. 2A including visible touches;
FIG. 2C shows a visual representation of capacitive measurements of the sensor of FIG. 2B after calibration;
FIG. 3A shows a visual representation of capacitive measurements of an empty capacitive sensor in cold conditions;
FIG. 3B shows a visual representation of capacitive measurements of an empty capacitive sensor in warm conditions;
FIG. 3C shows a visual representation of the differences between the measurements shown in FIG. 3A and the measurements shown in FIG. 3B;
FIG. 4 shows the control flow of a method for calibration and operation of a large capacitive sensor;
FIG. 5 shows a schematic representation of a system for calibration of a large capacitive sensor;
FIG. 6 shows a layout of a convolutional neural network based on the SegNet architecture;
FIG. 7A shows a visual representation of sample raw input sensor data for training a convolutional neural network for object detection;
FIG. 7B shows a visual representation of an output frame corresponding to the sample raw input sensor data of FIG. 7A.

In the following, the mechanism and advantages of this application will be further explained using the example of a large touch table. Note that the application is, however, not limited to touch tables, but could also be applied to other capacitive sensors, including capacitive sensors which are arranged in a three-dimensional surface.

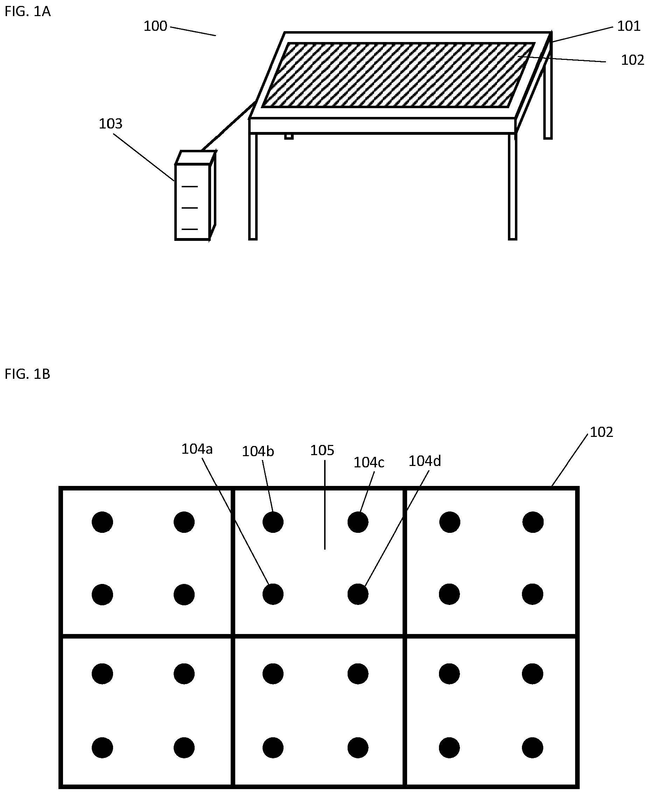

FIG. 1A shows a touch table system 100 including a touch table 101, which includes a capacitive sensor 102 mounted on the tabletop and/or forming the tabletop. The touch table 101 comprises a glass display, into which two layers of conductors are embedded. The change in capacitance between the two conductors is measured and a touch of the touch table 101 can be detected by way of said change in capacitance and also by projecting the touched location based on a change of capacitance at multiple measurement points. In the present example, mutual capacitance mode is used, so that each row and each column electrode of the conductor is driven to a specific voltage and frequency, thereby enabling precise localization of touches, even when there are multiple simultaneous touches.

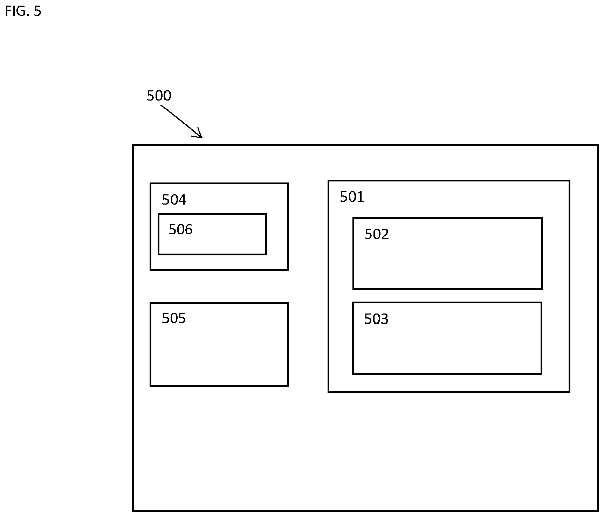

The touch table system 100 also includes a computer 103, which is connected to the touch table 101, e.g. wirelessly or by dedicated wires in order to exchange signals and/or data and/or messages. The computer 103 may also be integrated into the touch table 101. The specific message and data passing between the capacitive sensor and computer 103 is further described below with reference to FIG. 5.

FIG. 1B shows a top view of the capacitive sensor 102. For illustrative purposes, the capacitive sensor 102 of FIG. 1B has 6 x 4 measurement points 104a, 104b, 104c, 104d. Usually, capacitive sensors can be much larger. FIG. 1B also shows a grouping of the measurement points into raw data portions 105. The data portions 105 and their associated sub-areas of the sensor and display surface are further discussed with reference to the improved calibration method and system below.

Due to tiny differences in voltage and electrode wiring generally caused during manufacturing of the capacitive sensor, capacitive sensors such as the touch table shown in Fig. 1A and 1B generally detect inhomogeneous background capacitance and need to be calibrated in order to accurately detect touches and objects or other disturbances. This calibration is usually done by measuring the raw sensor values of the capacitive sensor when the display is empty, i.e. when no object or other disturbance is present on or near the sensor or respective touch table.

In the following visual representations of capacitive sensor data are discussed. The visual representation is generally obtained from the raw sensor data by way of a linear transformation and/or normalization to ensure that the data for visual representation lies between 0 and 1 and can, therefore, be displayed as a grayscale image. This transformation is only done for visualization, the actual processing of the data is carried out on the raw measured data.

Fig. 2A shows capacitive sensor measurements of an empty capacitive sensor 201. Fig. 2B shows the raw sensor data of the same sensor 201 with finger touches 202 as well as an ungrounded conductive object 203 such as a smartphone. An ungrounded conductive object can be any object which has electrically conductive parts which contact or come in the vicinity of the sensor to induce capacitive changes in the capacitive sensor; the ungrounded conductive object does not need to be fully electrically conductive. Said objects are regarded as ungrounded when they are not connected to the ground either directly or indirectly. An electrically conductive ungrounded object which is touched by a person standing next to the touch table becomes a grounded object. The distinction between ungrounded and grounded electrically conductive objects is relevant as electrically conductive ungrounded objects are harder to detect in the raw sensor data and are usually disregarded, or lead to errors, such as false detection of touches, by traditional capacitive sensor systems such as those used by smart phones or tablet computers. As indicated above, these capacitive changes can be induced by an effect known as retransmission, where a driven signal is transmitted through the electrically conductive part of the object and into other grounded electrodes in the capacitive sensor. This can result in either a loss or gain in mutual capacitance between row and column electrodes. These ungrounded conductive objects can be simple conductive circle- or cross-shaped objects, or the like, which are moved to specific locations of the sensor to indicate an input. Thus, these ungrounded conductive objects may serve as input devices for the capacitive sensor or touch sensitive display. Alternatively or additionally, also more complex ungrounded conductive objects, such as smartphones or smart-phone-like input devices can be used, which in addition to marking a location on the sensor can also receive additional input from the user, for example through a keyboard or the like, which is then additionally communicated to the respective touch table system. EP 3 574 398 A1 and EP 3 800 533 A1 describe examples of ungrounded electrically conductive objects in the sense of the present application.

Fig. 2C shows the difference between the raw sensor data of Fig. 2B and the background, i.e. calibration baseline, of Fig. 2A, thereby resulting in calibrated sensor data showing the finger touches 202 and the ungrounded conductive object 203. The calibrated sensor data of Fig. 2C can then be used for further processing to calculate specific touches and objects, based on which input data is determined.

As evident from Fig. 2B and 2C, ungrounded conductive objects such as the smartphone are difficult to detect from the raw data.

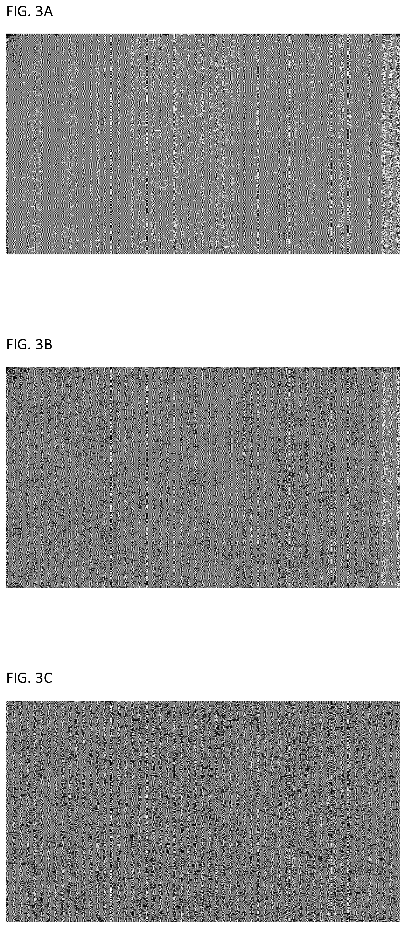

Fig. 3A and 3B show the same sensor under different environmental conditions, i.e. Fig. 3A shows the measured mutual capacitance of the empty cold sensor, while Fig. 3B shows the measured mutual capacitance of the empty warm sensor, wherein the temperature differences may be due to different environmental conditions and/or due to the sensor heating up, e.g. due to said environmental conditions or due to the display heating up the sensor or by objects and touches on the sensor or display surface. Fig. 3C shows the difference between the data of Fig. 3A and Fig. 3B, thus showing that the differences in measured data can be non-linear.

In traditional touch controllers this calibration takes place whenever the sensor is determined to be empty. A touch can be observed in the raw data by e.g. considering the column electrodes one at a time and looking for small regions of major deviation of values. In this case calibration does not take place. If the sensor is determined to be empty the background is updated with the current measured image. This approach has two major flaws.

Firstly, no calibration can take place while a touch is detected, that means that the performance of a sensor will deteriorate over the entire surface while a conductive object producing a signal, i.e. a large enough deviation in measured capacitance, is on the sensor. In the case of a touch table with object recognition this could easily be over 24 hours. For example, conductive input devices may be left on the touch table permanently or for extended periods of time. To recalibrate one must remove all objects from the sensor, which is highly unintuitive. In the case that an object or touch is already on the sensor at start-up, one will observe either the sensor not calibrating at all, or that object being "burned into" the baseline data, giving unexpected results.

Secondly, in the case of objects, such as conductive ungrounded objects, that are not clearly visible in the raw data using traditional methods, a calibration will take place that will include the capacitive measurement of this object in the background image, essentially leaving a negative version of the object once it is moved. In this area all detection will be negatively affected until a full calibration can be done.

Thus, the advantageous effect of improved accuracy and efficiency during calibration and re-calibration of the capacitive sensor 102 of the present application relies on a combination of rapid object detection and partial calibration.

The performance is, in particular, increased by splitting the workload of re-calibration across multiple frames, as it is not necessary to recalibrate the entire capacitive sensor every frame. For example, if processing a sub-area takes 0.1 ms, and the whole frame of 96 sub-areas takes 9.6 ms. Only 0.1 ms of latency will be added between every frame, rather than a 9.6 ms spike every 96 frames.

Secondly, when performing segmentation for object detection based on the raw data, each sub-area can be treated as being independent, thus, the controller can continuously recalibrate the background everywhere except where a touch or object is present. Issues where objects are on the sensor at start-up or for long periods of time are thus greatly mitigated.

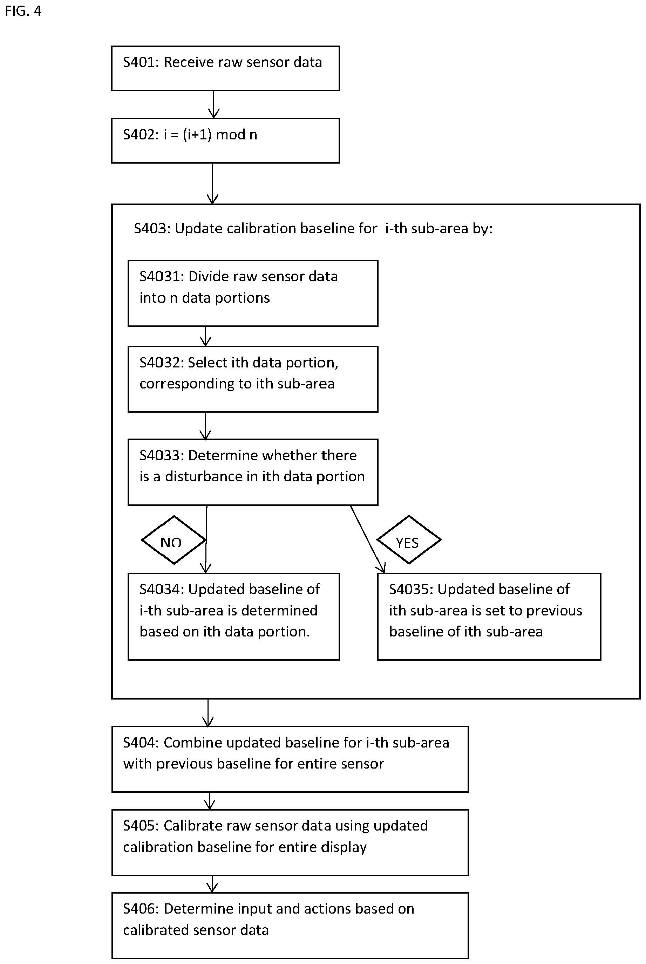

As described in the present application, calibration accuracy and performance (i.e. resource and time consumption during calibration) can be improved by the calibration method of FIG. 4. and the calibration system 500 of FIG. 5.

FIG. 4 shows a control flow of the method steps of the calibration and operation method and FIG. 5 shows the schematic components of the respective calibration system.

The method of FIG. 4 is executed in a loop which is running as long as the touch table is active, i.e. powered on. The loop is preferably executed every 10 ms, but could also be executed at shorter or longer intervals between, for example, 2 ms and 30 ms, depending on the expected response time of the touch table.

In Step 401, raw sensor data is received or obtained from the capacitive sensor 502 integrated into the touch table 502. The raw sensor data is obtained using a measuring unit 503 of the touch table 501.

The measuring unit 503 is configured to obtain capacitive measurements for the measurement points of the capacitive sensor 502 integrated into the touch table 501. The capacitive sensor 502 of the touch table system in the present example has a resolution of 80 x 48 measurement points. Alternatively, the number of measurement points could be different as long as the number of measurement points is appropriate to distinguish different positions of the display with high accuracy. In this regard, we also refer to the book "Projected Capacitive Touch" by T. Gray, Springer, 2019. The measurement unit 503 is furthermore configured to receive the capacitive measurements of the measurement points of the capacitive sensor 502 at predefined intervals also referred to as frames. In this way, a measurement of all the measurement points of the capacitive sensor 502 is obtained about every 10 ms.

The display of the touch table 501 has an exemplary display resolution of 1900 x 1000 pixels, thus the display resolution is generally much greater than the resolution of the capacitive sensor 502.

The raw sensor data obtained by the measuring unit 503 is transferred to a processing unit 504 of the touch table system 500 and is optionally additionally at least temporarily stored in the memory 505 of the touch table system 500. Note that the processing unit 504 and the memory 505 can be integrated into the touch table 501, but could also be separate entities which are connected to the touch table 501 by wired or wireless communication means.

The processing unit 504 is configured to increment a counter i in step S402, wherein the counter i is incremented modulo the total number of sub-areas n in order to effectively cycle through the sub-areas. Different means for cycling through the sub-areas can alternatively also be implemented by the skilled person. The processing unit 504 is then configured to divide, in step S4031 the raw sensor data into a plurality of raw sensor data portions, each of which corresponds to a contiguous and distinct sub-area of the capacitive sensor 102, as also shown by the sub-area 105 of 1B, which includes several measurement points 104a, 104b, 104c, 104d. In this example, the raw first sensor data is divided into 96 distinct data portions of 5 x 8 measurement points each, so that the 96 data portions together cover the entire surface of the capacitive sensor, i.e. the data of each measurement point is comprised by one of the data portions. Optionally, each data portion can additionally include some surrounding measurement points to create an overlap between the data portions. For example, when a data portion of size 8x8 measurement points is used, an overlap of four measurement points can additionally be used, thereby increasing the size of each data portion to 16x16 measurement points. The surrounding measurement points are used to ensure continuity between the different data portions. Preferably, only the core (in this case 8x8) measurement points, e.g. the measurement points that do not overlap with neighbouring portions, are then taken into account for the combined baseline, the surrounding measurement points are preferably only used as an aid to determine the baseline values for the core.

Now for each frame of raw sensor data received from the measurement unit 503, the processing unit 504 selects, in step S4032, the i-th of the raw sensor data portions for re-calibration. For the selected sensor data portion, the processing unit 504 first determines, in step S4033, based on the selected raw sensor data portion, whether there is a disturbance in the selected raw sensor data portion indicating a conductive object or a movement of a conductive object on or over the corresponding sub-area of the selected raw sensor data portion or if said corresponding sub-area is free from disturbance. To determine if there is a disturbance in the data, a pre-trained classification unit 506 is used. In the present example, the pre-trained classification unit 506 is an artificial neural network, which is designed and trained as further explained below. The neural network receives, as input, only the selected raw sensor data portion or, optionally, also some additional measurement points of the raw sensor data which surround the selected raw sensor data portion. Based on said input data, the pre-trained neural network, and thereby the processing unit, determines, whether there is a disturbance in the data of the selected raw sensor data portion.

Alternatively, two or more raw sensor data portions can be selected for calibration during each frame. In this case, the neural network determines independently for each of the selected raw sensor data portions if there is a disturbance in the selected raw data portion as described above.

When it is determined that the selected raw sensor data portion is free from disturbance and, hence, no conductive object is determined to be currently occupying or interfering with at least part of the corresponding sub-area of the selected raw data portion, the processing unit 504 determines, in step S4034, the updated calibration baseline of the selected sub-area by a temporal smoothing of the selected raw sensor data portion and the previous calibration baseline of the selected sub-area.

If it is determined by the pre-trained neural network, or, that there is a disturbance in the selected raw sensor data portion, i.e. there is an object or movement on or over the corresponding sub-area which is currently interfering with the capacitive sensor measurements, then the updated calibration baseline of the sub-area is determined, in step S4035, to be the previous calibration baseline for the selected sub-area. Thus, the calibration baseline is not updated when the sub-area is occupied and the corresponding raw sensor data is, therefore, subject to disturbances.

Alternatively to simply keeping the previous calibration baseline for the selected sub-area in case of disturbance, it is also possible to set the updated calibration baseline to a default value (or rather, as there may be several measurement points within the selected sub-area, to a matrix of default values). Alternatively, the previous calibration baseline might be adapted based on values of the calibration baseline of other sub-areas, similar to a content aware fill implemented in image manipulation tools.

For the purpose described above, the previous calibration baseline is stored in the memory 505, from which it can be retrieved by the processing unit 503 of the touch table system 500.

After the updated calibration baseline for the i-th sub-area and respective data portion has been determined, the processing unit can further combine, in step S404, the updated calibration baseline for the i-th sub-area with the previous calibration baseline for the entire sensor 502. Thus, only part of the entire calibration baseline is replaced.

In step S405, the processing unit can then determine a calibrated raw sensor data by determining a difference between the raw sensor data received in step S401 and the updated calibration baseline for the entire sensor. In step S406, the further actions of the touch table, i.e. inputs and actions based on those inputs, can then be determined based on the calibrated sensor data.

Alternatively, method steps S405 and S406 can also be executed in parallel with the updating of the calibration baseline. In this case, the previous calibration baseline is used for determining the calibrated sensor data, and the updated calibration baseline for the entire sensor is used in the subsequent iteration of the method of FIG. 4. It is furthermore also possible to skip the updating of the calibration baseline for some frames and, thus, re-use the same calibration baseline several times before updating the calibration baseline.

Thus, according to the method of FIG 4, at runtime the frame is split into smaller sub-areas. For example, a 128 x 192 sensor frame could be separated into 96 16x16 sub-areas, which are also referred to as buckets. Thus, the algorithm processes a single sub-area for each frame of raw sensor data, cycling through all the sub-frames one at a time before restarting from the first. The raw data can further be filtered using an exponential smoothing filter, which gives both de-noised raw data and an estimate of the rate of change of the data.

If a sub-area is repeatedly determined to be occupied, i.e. the corresponding raw sensor data portion is repeatedly determined to be disturbed by a conductive object, then the respective sub-area is divided into at least two distinct sub-sub-areas, which are subsequently re-calibrated individually. The division into sub-sub-areas can be repeated recursively and down to the pixel-level if necessary. Once all sub-sub-areas of a sub-area are determined to be empty, the division into sub-sub-areas is reversed.

In FIG. 4, calibration is performed by processing the raw (uncalibrated) sensor data directly using a pre-trained segmentation convolutional neural network, in order to determine, in step S4033, if there is a disturbance in the sub-area and respective data portion as further explained below. The output of this neural network is a per-pixel value that denotes whether an object of interest is currently occupying that position on the sensor. Here, an object of interest can be a touch of the respective position, for example using a finger, other body part, or a grounded object. An object of interest can also be an ungrounded conductive object such as a smartphone or passive conductive input device, which causes a change in the raw data by way of re-transmission. Additionally to objects, the pre-trained segmentation network can also detect non-touch disturbances, i.e. movements which are very close to the sensor but which are not touching the sensor. Such movements may for example indicate that a touch is imminent or that a gesture is currently executed over the respective position.

Measurement data which indicates an object or movement at a given position, also referred to as measurement point, of the sensor, cannot be used for determining or updating the calibration baseline due to the adverse effects described above.

As already discussed, sensor data is, in general, collected in frames, which have a pre-defined duration, i.e. a frame refers to one sensor measurement taken for the whole sensor, with individual frames spaced temporally at short intervals. For responsive user interfaces it is desirable to process each frame within 10 ms.

Segmentation of the raw sensor data to determine objects and also the determination of the calibration baseline is computationally expensive. Thus, as discussed above, the raw sensor data is split into sub-areas, and only one or some of the sub-areas are re-calibrated for each frame. During re-calibration, the process of segmentation, i.e. object and movement detection, on raw data is furthermore sped up using neural networks, as described below.

As discussed above, the segmentation, i.e. detection of disturbances, is preferably implemented by way of a convolutional neural network.

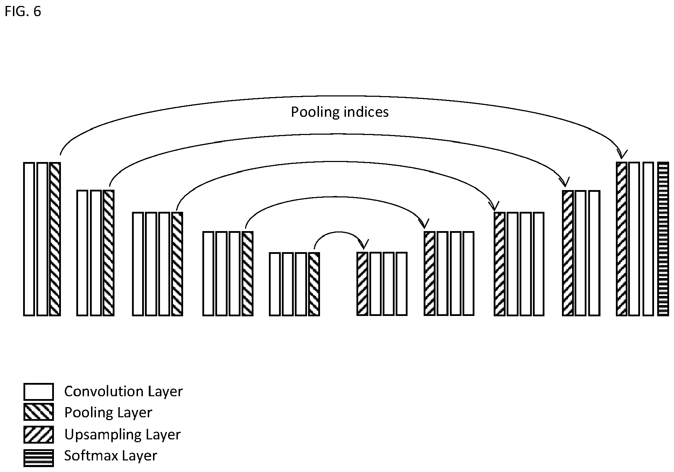

The segmentation network for the background and the full frame segmentation are based on the SegNet architecture (Badrinarayanan et. al., "SegNet: A Deep Convolutional Encoder-Decoder for Image Segmentation", IEEE TRANSACTIONS ON PATTERN ANALYSIS AND MACHINE INTELLIGENCE, vol. 39, no. 12, 2017. This is a fully convolutional network with pooling, upscaling and skip layers for the effective recognition of small- and large-scale features, as shown in FIG. 6. The number of layers of the SegNet architecture can be further optimized during the training.

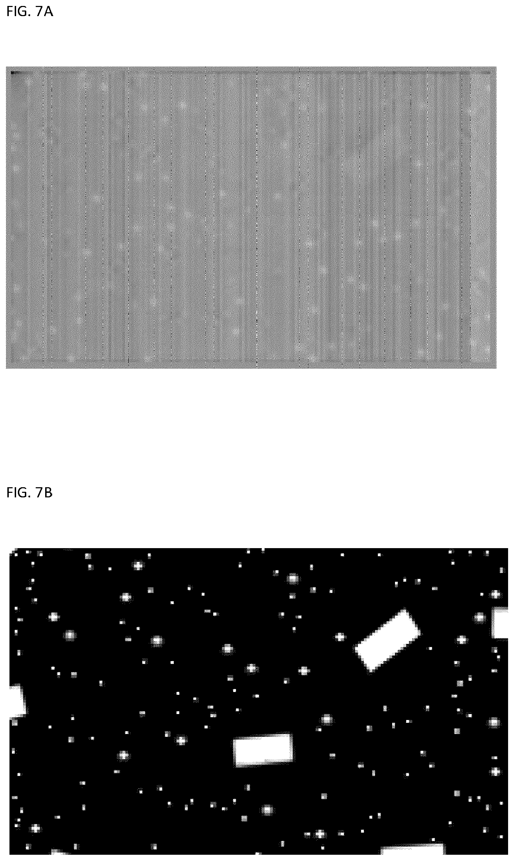

Neural networks are generally trained, i.e. the parameters are optimized, based on a training set of data. In the present case, each data point in the training set comprises a sample raw data input of a capacitive sensor as well as a corresponding output frame, where the disturbances are correctly identified. An example of a visual representation of sample raw input sensor data is shown in FIG. 7A, while a corresponding output frame is shown in FIG. 7B. Please note that, as evident from FIGS 7A and 7B, some disturbances, in particular those caused by grounded conductive objects such as a human finger, are much more easily visible in the raw sensor data, while other, ungrounded conductive objects, such as the mobile phone are much harder to detect for the human eye. However, when determining if there is a disturbance in a certain sub-area, it is necessary to detect both grounded and ungrounded conductive objects with a same or similar accuracy. This can be achieved by training the neural network based on a set of training data comprising pairs of raw sensor data and output frames as shown in FIG 7A and 7B.

For optimal results, the training data is constructed from collected mutual capacitive data for fingers, objects for object detection, devices, palms overlaid on various sensor backgrounds at different temperatures. Additional noise may be added to augment the data for a robust final network.

To optimize the parameters of a neural network, an architecture of the neural network is first selected and initial parameters are chosen, usually based on empirical knowledge for similar data. The training data is then divided into several sets based on which cross-validation may be implemented to avoid over-fitting.

Alternatively to neural networks, other machine learning models can also be used for implementing the segmentation, i.e. object detection in the raw sensor data.

## Claims

1. Method for calibrating a capacitive sensor (102), the method comprising the following steps:
- receiving (S401) raw first sensor data from the capacitive sensor,
- dividing (S4031) the raw first sensor data into a plurality of raw sensor data portions, wherein each raw sensor data portion corresponds to a contiguous sub-area of the capacitive sensor;
- for each of at least a subset of the raw sensor data portions determining an updated calibration baseline for the corresponding sub-area by:
o determining (S4033), based on the raw sensor data portion whether there is a disturbance in the raw sensor data portion indicating an object or a movement on or over the corresponding sub-area or if said corresponding sub-area is free from disturbance;
∘ if the sub-area is determined to be free from disturbance: determining (S4034) the updated calibration baseline of the sub-area based on the current sensor measurements associated with the sub-area;
∘ if it is determined that there is a disturbance in the raw sensor data portion, determining (S4035) the updated calibration baseline of the sub-area based on at least one of: a previous calibration baseline, raw sensor data of other raw sensor data portions, and/or pre-determined default values.

2. The calibration method according to claim 1, wherein determining whether there is a disturbance in the raw sensor data portion comprises determining if a conductive object is currently located on the corresponding sub-area.

3. The calibration method according to claim 1 or 2, wherein the method further comprises
- Selecting (S4032) a subset of the plurality of raw sensor data portions;
- determining the updated calibration baseline for the corresponding sub-area (105) for each of the selected raw sensor data portions; and
- combining (S404) the updated calibration baselines of the selected sub-areas (105) with the previous calibration baselines of unselected sub-areas (105) into an updated calibration baseline of the capacitive sensor.

4. The calibration method according to claim 3, wherein the method is applied repeatedly and a different subset of the plurality of data portion is selected during subsequent applications until each data portion has been selected.

5. The calibration method according to claim 4, wherein determining whether there is a disturbance in the raw sensor data portion comprises determining if there is a movement over the corresponding sub-area (105) based on at least two subsequent measurements of raw sensor data corresponding to the sub-area.

6. The calibration method of any of the preceding claims, wherein the raw first sensor data is divided into the plurality of sensor data portions based on a predefined grid.

7. The calibration method according to any of the preceding claims,
wherein the predefined grid is dynamically adjusted if it is determined that an object is on the corresponding sub-area of at least one of the raw sensor data portions in the subset of raw sensor data portions.

8. The calibration method according to any of the preceding claims,
wherein the determining if there is a disturbance with the raw sensor data portion is performed by using a pre-trained neural network.

9. The calibration method according to claim 8, wherein the neural network is pre-trained using artificially enhanced training data.

10. The calibration method according to claim 9, wherein the artificially enhanced training data is generated by repeated recombination of measured data of several capacitive sensors (102) and several common objects (202, 203) which are placed on the capacitive sensors (102).

11. The calibration method according to any of the preceding claims,
wherein the capacitive sensor has a diagonal length of at least 60 cm and/or a resolution of at least 80 by 48 distinguishable portions; and/or
wherein the capacitive sensor (102) is integrated into a touch sensitive display, the display having a resolution of at least 3000 by 2000 pixels.

12. The calibration method according to any of the preceding claims,
wherein the plurality of sensor data portions comprises at least six sensor data portions.

13. A method of operating a capacitive sensor, comprising the method for calibrating the capacitive sensor according to any of the preceding claims, and further comprising the steps of :
- Receiving raw second sensor data of the capacitive sensor;
- Subtracting (S405) the current baseline of the capacitive sensor from the second sensor data to obtain a calibrated second sensor data.

14. The method of operating the capacitive sensor according to claim 13, wherein the method further comprises the steps of:
- Detecting (S406) objects from the calibrated second sensor data;
- Inferring a type of the detected objects and movements of the detected objects from the calibrated second sensor data in order to determine a user input of the capacitive sensor.

15. Calibration system (500) for a capacitive sensor (502), the system comprising
- a memory (505) comprising a previous calibration baseline of the capacitive sensor (502);
- a measuring unit (503) configured to measure raw first sensor data of the capacitive sensor (502);
- a processing unit (504) configured to divide the raw first sensor data into a plurality of raw sensor data portions, wherein each raw sensor data portion corresponds to a contiguous sub-area of the capacitive sensor;
- the processing unit (504) further configured to determine, for each of at least a subset of the raw sensor data portions, an updated calibration baseline for the corresponding sub-area by:
∘ determining (S4033), based on the raw sensor data whether there is a disturbance in the raw sensor data portion indicating an object or a movement on or over the corresponding sub-area or if said corresponding sub-area is free from disturbance;
∘ if the sub-area is determined to be free from disturbance: determining (S4034) the updated calibration baseline of the sub-area based on the current sensor measurements associated with the sub-area;
∘ if it is determined that there is a disturbance in the raw sensor data portion, determining (S4035) the updated calibration baseline of the sub-area based on at least one of: a previous calibration baseline, raw sensor data of other raw sensor data portions, and/or pre-determined default values.
